(19) Europäisches Patentamt / European Patent Office / Office européen des brevets

(11) **EP 2 616 778 B1**

(12) **EUROPÄISCHE PATENTSCHRIFT**

(45) Veröffentlichungstag und Bekanntmachung des Hinweises auf die Patenterteilung:
**03.08.2016   Patentblatt 2016/31**

(51) Int Cl.:
**G01B 7/14** (2006.01)        **G01B 7/30** (2006.01)
**G01D 5/14** (2006.01)        **G01D 5/244** (2006.01)

(21) Anmeldenummer: **11763886.6**

(22) Anmeldetag: **14.09.2011**

(86) Internationale Anmeldenummer:
**PCT/EP2011/065964**

(87) Internationale Veröffentlichungsnummer:
**WO 2012/035077 (22.03.2012 Gazette 2012/12)**

(54) **VERFAHREN UND VORRICHTUNG ZUR ABSOLUTEN POSITIONSBESTIMMUNG EINES BEWEGLICHEN KÖRPERS**

METHOD AND DEVICE FOR DETERMINING THE ABSOLUTE POSITION OF A MOVABLE BODY

PROCÉDÉ ET DISPOSITIF POUR DÉTERMINER LA POSITION ABSOLUE D'UN CORPS MOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.09.2010   AT 15232010**

(43) Veröffentlichungstag der Anmeldung:
**24.07.2013   Patentblatt 2013/30**

(73) Patentinhaber: **Zentrum Mikroelektronik Dresden AG**
**01109 Dresden (DE)**

(72) Erfinder: **JANISCH, Josef**
**A-8262 Ilz (AT)**

(74) Vertreter: **Lippert, Stachow & Partner Patentanwälte**
**Krenkelstrasse 3**
**01309 Dresden (DE)**

(56) Entgegenhaltungen:
**WO-A2-2007/149200        WO-A2-2009/088767**
**DE-A1- 19 502 399        US-A1- 2005 172 732**
**US-A1- 2009 206 827**

EP 2 616 778 B1

**Beschreibung**

Die Erfindung betrifft ein Verfahren zur Bestimmung der absoluten Position eines relativ zu zwei magnetosensitiven Sensoren drehbaren Elements, an welchem eine Magnetfeldquelle befestigt ist, deren magnetische Eigenschaften mittels der magnetosensitiven Sensoren dadurch ermittelt werden, dass ein erstes Sensorsignal mit einem ersten magnetosensiviten Sensor und ein zweites Sensorsignal mit einem zweiten magnetosensitiven Sensor gemessen wird. Dabei weisen die Sensorsignale, welche eine Komponente des Magnetfeldes repräsentieren, einen Phasenversatz $\varphi$ im Bereich von 0°< $\varphi$ <180° oder 180° < $\varphi$ <360° auf.

Unter magnetosensitiven Sensoren sollen fortfolgend insbesondere Hallsensoren und magneto-resistive Sensoren verstanden werden.

Die Erfindung betrifft auch eine Vorrichtung zur berührungslosen Erfassung der absoluten Position eines drehbaren Elements, welches eine auf dem beweglichen Element befestigte Magnetfeldquelle aufweist.

Die kontaktlose Bestimmung der absoluten Drehwinkelposition eines bewegten Körpers wird wegen ihrer Robustheit und Langlebigkeit vor allem in Sensoren der Automobilindustrie, der industriellen Automation, bei Geräten der Medizintechnik und der Konsumgüterindustrie benötigt.

Die berührungslose Erfassung des absoluten Drehwinkels mithilfe eines drehbar gelagerten Magneten und eines auf Hallsensoren basierenden Meßprinzips wird in verschiedenen Patentschriften beschrieben.

In DE 698 16 755 T2 (Austria Mikrosysteme, 03.06.2004) wird ein Verfahren beschrieben, welches die für die Berechnung der Drehstellung notwendigen Signale aus der Differenzbildung von zwei Hallsensorgruppen ermittelt. Nachteilig an diesem Verfahren ist, dass drei oder vier Sensoren erforderlich sind und die beschriebene Vorrichtung einen axialen Aufbau erfordert in welchem sich die Hallsensoren unterhalb des drehbar gelagerten Magneten befinden. Eine Bestimmung der Drehstellung durch Montage des Sensors am Umfang der Magnetfeldquelle, wie in dieser Erfindungsmeldung beschrieben, ist mit dem Verfahren nach DE 698 16 755 T2 nicht möglich, da der Sensor zentrisch zur Drehachse angebracht werden muss.

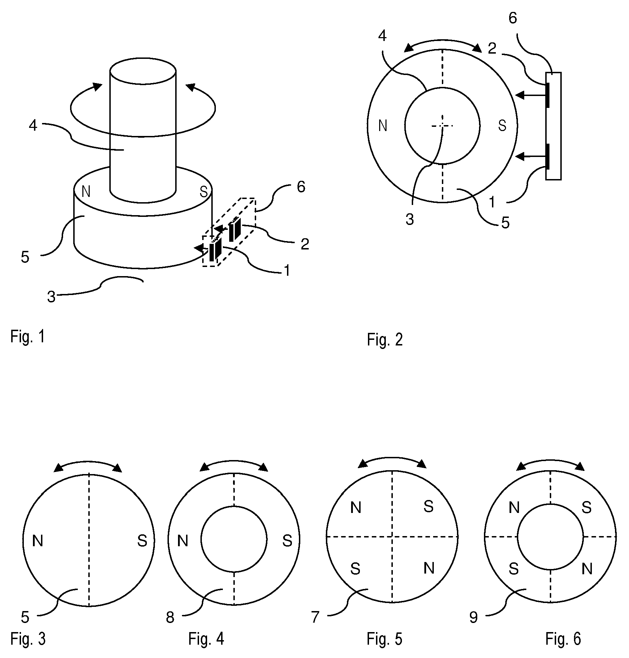

In WO2009088767A2 (Allegro Microsystems, 16.07.2009) werden zwei Ausführungsformen beschrieben. In einer ersten Ausführungsform (Fig. 1 -47, Claims 1-12) wird ein Aufbau beschrieben, welcher die absolute Winkelposition mittels 2 oder 4 unterhalb der Magnetfeldquelle angeordneten Hallsensoren bestimmt indem das axiale Magnetfeld gemessen wird. Die Signalauswertung erfolgt analog. In dieser Ausführungsform wird auch eine analoge Methode zur Korrektur des Phasenveratzes beschrieben, wobei der Phasenversatz 90°< $\varphi$ < 180° betragen muss.

In einer zweiten Ausführungsform von WO2009088767A (Fig. 48 - 55, Claims 13-29) wird ein Aufbau beschrieben, in welchem die Sensoren am Umfang der Magnetfeldquelle angebracht sind und das radiale Magnetfeld messen. Allerdings werden dafür drei oder vier Hallsensoren benötigt.

Das in dieser Erfindungsmeldung beschriebene Verfahren verwendet für diese Art der Messung nur zwei Hallsensoren.

In WO200004339 A1 (Unique Mobility Inc., 27.01.2000) wird ein Aufbau beschrieben, in welchem zwei Hallsensoren am Umfang der Magnetfeldquelle derart angebracht sind, dass sie das tangentiale Magnetfeld erfassen. Weiterhin sind die Sensoren derart angeordnet, dass die gemessenen Signale einen fixen Phasenversatz von 90° aufweisen.

Nachteilig dabei ist, dass sich der Phasenversatz durch Positionsungenauigkeiten bei der Montage der Hallsensoren verändern kann. Dieser Fehler wird nicht kompensiert. Weiterhin erfordert dieser Aufbau zwei lineare Hallsensoren in getrennten Gehäusen.

In WO2008/077861 (ZF Lenksysteme, 03.07.2008) wird ein Aufbau beschrieben, in welchem zwei Hallsensoren am Umfang einer zweipolig magnetisierten Magnetfeldquelle derart angebracht sind, dass sie das radiale Magnetfeld erfassen. Die Sensoren sind derart angeordnet, dass sie einen fixen Phasenversatz von 90° aufweisen.

Nachteilig dabei ist, dass sich der Phasenversatz durch Positionsungenauigkeiten bei der Montage der Hallsensoren verändern kann. Dieser Fehler wird nicht kompensiert. Weiterhin erfordert dieser Aufbau zwei lineare Hallsensoren in getrennten Gehäusen.

Um einen Phasenversatz von 90° zu erreichen, müssen die Sensoren genau im Abstand einer Vierteldrehung der Magnetfeldquelle positioniert werden, was einen relativ großen Platzbedarf nach sich zieht.

In US20080290859 (Timken Corp. 27.11.2008) wird ein Aufbau beschrieben in welchem die Absolutposition eines linear bewegten Objekts oder eines drehbaren Objekts mithilfe eines mehrpoligen Magneten bestimmt werden kann. Dazu wird eine Gruppe aus mehreren, in einer Reihe liegenden Hallsensoren derart zusammengeschaltet, dass sich daraus ein Sinus- und Cosinussignal ergeben. Phasenunterschiede der Signale, welche durch unterschiedliche Pollängen relativ zur Länge der Sensorgruppe hervorgerufen werden, können mittels Verstärkungseinstellung kompensiert werden.

Nachteilig bei diesem Verfahren ist, dass die Absolutposition nur innerhalb eines Polpaares der mehrpoligen Magnetfeldquelle ermittelt werden kann. Eine unmittelbare, absolute Positionsbestimmung über eine volle Umdrehung von 360° ist mit diesem Verfahren nicht möglich.

In US20100194385 (Moving Magnet Technologies, 05.08.2010) wird die Absolutposition am Umfang einer Magnetfeldquelle bestimmt, indem ein Sensor sowohl das radiale als auch das tangentiale Magnetfeld erfasst. Aus diesen beiden, naturgemäß 90° zueinander phasenverschobenen Signalen wird dann die absolute Winkelposition berechnet.

Durch die Messung sowohl des radialen als auch des tangentialen Magnetfelds sind spezielle Sensortypen erforderlich (laterale Hallsensoren mit ferromagnetischem Feldkonzentrator, siehe. Fa. Melexis, Trademark Triaxis®). Die Sensoren sind bedingt durch die Sensitivität auf Magnetfelder in 2 Achsen (x und y, respektive radiales und tangentiales Feld) empfindlich auf externe magnetische Störfelder.

US 2009/206827 A1 betrifft ein Verfahren zur Bestimmung der absoluten Drehstellung eines beweglichen Elements mittels magnetosensitiver Sensoren. Die Sensorsignale liegen hier von vornherein um 90 Grad phasenverschoben vor, siehe Paragraph 257, wo in Hinblick auf die Bestimmung des Winkels lediglich von einer Arcustangensberechnung die Rede ist, sowie Paragraph 35, der dies explizit klarstellt. Auch die Signalverläufe der Figuren 15a - 15c der D1 zeigen um 90 Grad phasenverschobene Signale.

Der Erfindung liegt die Aufgabe zugrunde, ein Verfahren zur absoluten Positionsbestimmung eines drehbaren Elements bereitzustellen, das zuverlässig ist und sicher arbeitet. Der Erfindung liegt des Weiteren die Aufgabe zugrunde, eine Vorrichtung zur Durchführung des erfindungsgemäßen Verfahrens bereitzustellen.

Die Aufgabe wird erfindungsgemäß durch die kennzeichnenden Merkmale des Anspruchs 1 als Verfahren und des Anspruchs 7 als Vorrichtung erzielt. Die abhängigen Ansprüche betreffen besondere Ausführungsformen.

Die Erfindung betrifft ein Verfahren zur Bestimmung der absoluten Position eines relativ zu zwei magnetosensitiven Sensoren drehbaren Elements, an welchem eine Magnetfeldquelle befestigt ist, deren magnetische Eigenschaften mittels der magnetosensitiven Sensoren dadurch ermittelt werden, dass ein erstes Sensorsignal mit einem ersten magnetosensiviten Sensor und ein zweites Sensorsignal mit einem zweiten magnetosensitiven Sensor gemessen wird, wobei das erste Sensorsignal und das zweite Sensorsignal eine Komponente des Magnetfeldes repräsentiert und die Sensorsignale einen Phasenversatz $\varphi$ im Bereich von $0° < \varphi < 180°$ oder $180° < \varphi < 360°$ aufweisen, wobei vorgesehen ist,

- dass Amplitudenverhältnisse durch Division eines vorgebbaren Signalhubs durch eine Differenz eines Maximumwertes und eines Minimumwertes der jeweiligen Sensorsignale bestimmt werden,
- dass Offsetwerte um den jeweiligen Nullpunkt der Sensorsignale aus den Minimum- und Maximumwerten der Sensorsignale bestimmt werden,
- dass mittels Subtraktion der Offsetwerte von den Sensorsignalen und durch Normierung mit den Amplitudenverhältnissen normierte Sensorsignale berechnet werden, wobei die Bestimmung der Minimum- und Maximumwerte durch eine relative Bewegung des Elements und der daran befestigten Magnetfeldquelle über eine volle Umdrehung von 360° bei gleichzeitiger Erfassung der Sensorsignale beider Sensoren erfolgt,
- dass von den normierten Sensorsignalen ein Summensignal und ein Differenzsignal gebildet werden,
- dass das Summensignal und das Differenzsignal wiederum nach Bestimmung des Amplitudenverhältnisses normiert werden, wobei die Bestimmung der Minimum- und Maximumwerte durch relative Bewegung des Elements und der daran befestigten Magnetfeldquelle über eine volle Umdrehung von 360° bei gleichzeitiger Messung des Summensignals sowie des Differenzsignals und Auswertung der Minimum- und Maximumwerte des Summensignals und des Differenzsignals erfolgt und
- dass mittels des normierten Summensignals und des normierten Differenzsignals eine absolute Drehstellung der Magnetfeldquelle berechnet wird.

In einer Ausführungsform des Verfahrens ist vorgesehen, dass die Komponente des Magnetfeldes die radiale oder die axiale Komponente ist.

In einer Ausführungsform des Verfahrens ist vorgesehen, dass die absolute Drehstellung der Magnetfeldquelle durch Bildung des Arcustangens des Verhältnisses von dem normierten Summensignal und dem normierten Differenzsignal berechnet wird.

In einer Ausführungsform des Verfahrens ist vorgesehen, dass die absolute Drehstellung der Magnetfeldquelle mittels eines Algorithmus der Koordinatentransformation, vorzugsweise mit einem CORDIC Algorithmus berechnet wird.

In einer Ausführungsform des Verfahrens ist vorgesehen, dass die Sensorsignale größer als das Rauschen sind.

Die Erfindung betrifft des Weiteren eine Vorrichtung zur berührungslosen Erfassung der absoluten Position eines drehbaren Elements, welches eine auf dem drehbaren Element befestigte Magnetfeldquelle aufweist, wobei zwei in einer Ebene liegende, in Richtung der Bewegung räumlich versetzte magnetosensitive Sensoren von der Magnetfeldquelle beabstandet angeordnet sind, wobei der Abstand zwischen den Sensoren so gewählt wird, dass der sich ergebende Phasenversatz der Sensorsignale nicht 180° und nicht 360° beträgt.

In einer Ausführungsform der Vorrichtung ist vorgesehen, dass die Magnetfeldquelle einen mehrpolig magnetisierten Scheibenmagnet oder Ringmagnet mit pp Polpaaren aufweist, welche einen absolut messbaren Drehstellungsbereich von 360 Grad geteilt durch die Anzahl der Polpaare ermöglicht.

In einer Ausführungsform der Vorrichtung ist vorgesehen, dass

die Magnetfeldquelle einen 2-polig diametral magnetisierten Scheibenmagnet aufweist.

In einer Ausführungsform der Vorrichtung ist vorgesehen, dass das bewegliche Element als drehbar gelagertes Element oder als translatorisch bewegliches Element ausgeführt ist.

In einer Ausführungsform der Vorrichtung ist vorgesehen, dass die Sensoren gemeinsam auf einem Sensorchip integriert sind.

In einer Ausführungsform der Vorrichtung ist vorgesehen, dass der Sensorchip einen Analog/Digitalwandler enthält, der eingangsseitig mit den Ausgängen der Sensoren sowie ausgangsseitig mit einer digitalen Recheneinheit verbunden ist.

In einer Ausführungsform der Vorrichtung ist vorgesehen, dass die digitale Recheneinheit einen Speicher zur Aufnahme von Offset und Verstärkung aufweist.

Das Verfahren und die zugehörige Vorrichtung werden im Folgenden anhand von Ausführungsbeispielen unter Bezugnahme auf Zeichnungen beschrieben.

Fig. 1 zeigt eine Ausführungsform. Die für die Messung des Magnetfeldes empfindlichen Achsen der auf einem gemeinsamen Substrat 6 integrierten Hallelemente 1,2 sind als Pfeile dargestellt.

Fig. 2 zeigt eine Draufsicht der in Fig. 1 beschriebenen Ausführungsform,

Es zeigen:

Fig. 3 - Fig. 6 verschiedene Ausführungsformen von geeigneten Magnetfeldquellen,

Fig. 3 und Fig. 4 einen 2-polig diametral magnetisierten Scheibenmagnet 5 bzw. Ringmagnet 8, mit welchen eine Bestimmung der absoluten Drehstellung über 360° möglich ist,

Fig. 5 und Fig. 6 einen mehrpolig magnetisierten Scheibenmagnet 7 bzw. Ringmagnet 9,

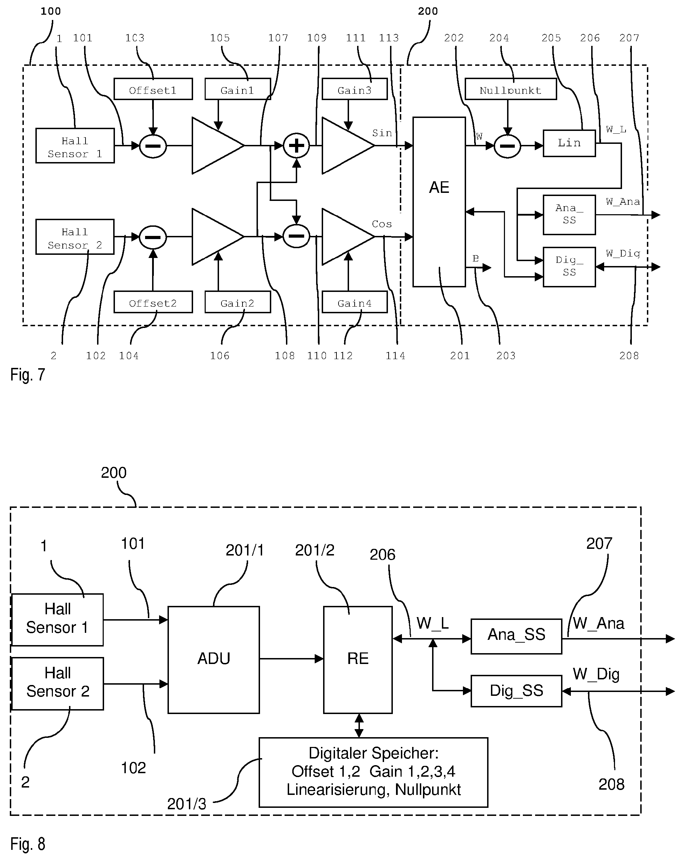

Fig. 7 ein analoges Blockschaltbild der Signalverarbeitung,

Fig. 8 ein digitales Blockschaltbild der Signalverarbeitung, und

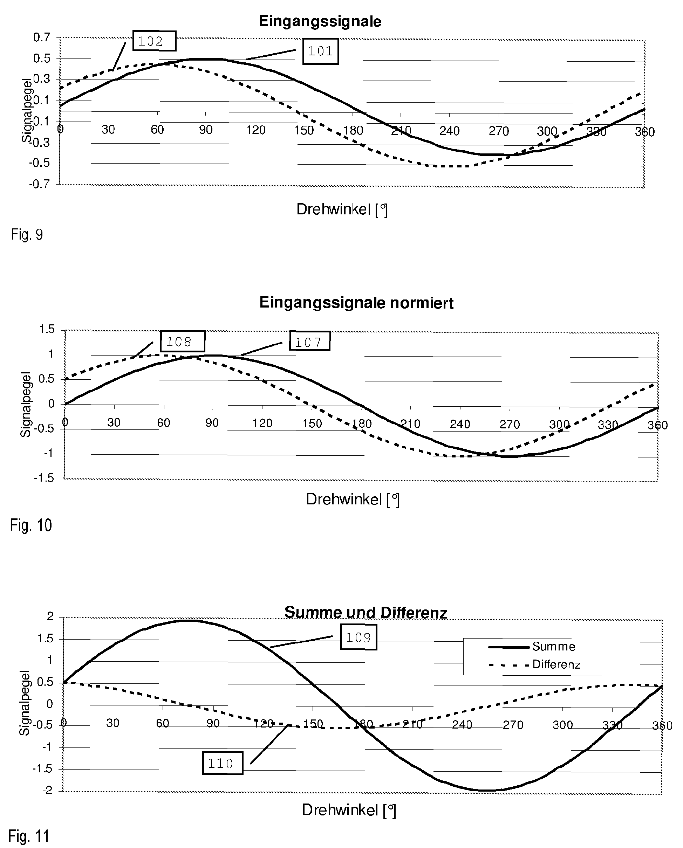

Fig. 9 bis Fig. 13 Signalverläufe.

In Fig. 9 und 10 ist analoge Signalverarbeitungspfad in Block 100 dargestellt und der digitale Signalverarbeitungspfad in Block 200 dargestellt.

Im Ausführungsbeispiel wie Fig. 9 gezeigt, wird angenommen, dass die gemessenen Signale der Hallsensoren 1, 2 eine Phasenlage von 30° besitzen, bereits vorverstärkt und aufgrund von Einflüssen der Positionierungsgenauigkeit sowie aufgrund von prozesstechnischen Toleranzen sowohl mit Offsetspannungen als auch mit unterschiedlichen Signalpegeln behaftet sind.

In einem ersten Schritt wird die Offsetspannung der Sensorsignale 101,102 subtrahiert und die Signalpegel auf einen normierten Signalhub (beispielsweise $2V_{SS}$) angeglichen. Die normierten Signalpegel stehen als Signal 107 und 108 zur Verfügung und sind in Fig. 10 dargestellt.

Um die erforderlichen Trimmwerte für Offset1, Offset2, Gain1 und Gain2 zu errechnen ist es ausreichend, die Minimum - sowie Maximumwerte der Sensorsignale 101,102 zu ermitteln. Dies kann durch einfache Drehung der Magnetfeldquelle bei gleichzeitiger Ermittlung der Minimum- und Maximumwerte der Sensorsignale 101 und 102 geschehen.

Aus den Minimum- und Maximumwerten können dann die für die Trimmung notwendigen Werte folgendermaßen errechnet werden:

$$Offset1 = \frac{H1_{max} + H1_{min}}{2} \qquad [1]$$

$$Offset2 = \frac{H2_{max} + H2_{min}}{2} \qquad [2]$$

$$Gain1 = \frac{normierter\_Signalhub}{H1_{max} - H1_{min}} \qquad [3]$$

$$Gain2 = \frac{normierter\_Signalhub}{H2_{max} - H2_{min}} \qquad [4]$$

für

$$HI_{max,min} = \text{Maximum- bzw. Minimumwert von Sensorsignal1 101}$$
$$H2_{max,min} = \text{Maximum- bzw. Minimumwert von Sensorsignal2 102}$$

Von diesen normierten Signalen wird im nächsten Schritt die Summe 109 und die Differenz 110 gebildet. In Fig. 11 sind diese Signale dargestellt.

Das Verhältnis des Signalhubs von Summensignal zu Differenzsignal hängt von der Phasenlage φ der Eingangssignale 101,102 ab. Die Phasenlage φ von Summensignal zu Differenzsignal beträgt jedoch immer 90°. Eine Ausnahme bilden die Sonderfälle der Phasenlagen φ = 360° = 0° sowie φ = 180°, bei welchen eine Bestimmung der Drehlage nicht möglich ist, da bei φ = 180° das Summensignal zu 0 wird und bei φ = 360° = 0° das Differenzsignal zu 0 wird.

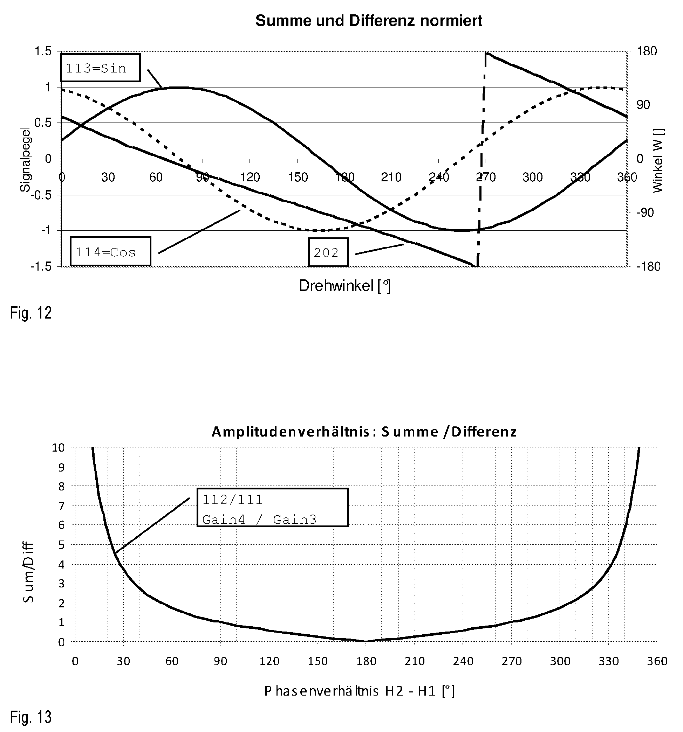

In Fig. 13 ist diese Relation grafisch dargestellt. Die X-Achse zeigt das Phasenverhältnis der Eingangssignale 101,102 und die Y-Achse zeigt das Amplitudenverhältnis der Scheitelwerte von Summensignal zu Differenzsignal.

Der mathematische Zusammenhang der Scheitelwerte von Summensignal durch Differenzsignal $= \dfrac{\hat{S}}{\hat{D}}$ zu Phasenlage errechnet sich aus:

$$\frac{\hat{S}}{\hat{D}} = \frac{1}{\tan\left(\dfrac{\varphi}{2}\right)} \qquad \text{für } 0° < \varphi < 180°$$

$$[5]$$

$$\frac{\hat{S}}{\hat{D}} = \frac{-1}{\tan\left(\dfrac{\varphi}{2}\right)} \qquad \text{für } 180° < \varphi < 360°$$

$$[6]$$

In einem weiteren Schritt werden das Summensignal 109 und das Differenzsignal 110 wiederum auf einen vorgegebenen Wert, beispielsweise 2V$_{SS}$ normiert.

Um die erforderlichen Trimmwerte für Gain3 und Gain4 zu errechnen ist es ausreichend, die Minimum - sowie Maximumwerte des Summen- und Differenzsignals zu ermitteln. Dies kann durch einfache Drehung der Magnetfeldquelle 5 über eine volle Periode bei gleichzeitiger Ermittlung der Minimum- und Maximumwerte von Summen- und Differenzsignal geschehen.

Aus den Minimum- und Maximumwerten können dann die für die Trimmung notwendigen Werte folgendermaßen errechnet werden:

$$Gain3 = \frac{normierter\_Signalhub}{Summensignal_{max} - Summensignal_{min}} \qquad [7]$$

$$Gain4 = \frac{normierter\_Signalhub}{Differenzsignal_{max} - Differenzsignal_{min}} \qquad [8]$$

Geht man davon aus, dass die normierten Sensorsignale 107,108 einer reinen Sinusform entsprechen und keine Offsetspannung mehr aufweisen, so entsteht durch die Summen- und Differenzbildung ebenfalls kein zusätzlicher Offset. Dies kann mittels der Minimum- und Maximumwerte von Summen- und Differenzsignal überprüft und gegebenenfalls auch korrigiert werden:

$$Offset_{Summensignal} = \frac{Summensignal_{max} + Summensignal_{min}}{2} \qquad [9]$$

$$Offset_{Differenzsignal} = \frac{Differenzsignal_{max} + Differenzsignalsignal_{min}}{2} \qquad [10]$$

Die normierten Signale des Summensignals 113 und des Differenzsignals 114 ergeben somit zwei um exakt 90° phasenverschobene Signale mit gleichem Signalhub. Diese Signale werden nun zur Errechnung der Drehstellung unmittelbar herangezogen.

In weiterer Folge werden das normierte Summensignal 113 mit Vsin und das normierte Differenzsignal 114 mit Vcos beschrieben.

```
Vsin = Gain3*[Gain1*(H1-Offset1)+Gain2*(H2 - Offset2)] [11]
```

```
Vcos = Gain4*[Gain1*(H1-Offset1)-Gain2*(H2 - Offset2)] [12]
```

Für H1 = Sensorsignal von Hallsensor1 101
H2 = Sensorsignal von Hallsensor2 102
Offset1 = Offsetsignal von Hallsensor1 103
Offset2 = Offsetsignal von Hallsensor2 104
Gain1= Verstärkung des Sensorsignals H1 105
Gain2= Verstärkung des Sensorsignals H2 106
Gain3= Verstärkung des Summensignals 111
Gain4= Verstärkung des Differenzsignals 112

Ausgehend von den Eingangssignalen Vsin 113 und Vcos 114 kann die absolute Drehstellung W 202 der Magnetfeldquelle mit Hilfe der Arkustangensfunktion

$$W = \arctan \frac{V\sin}{V\cos} \qquad [13]$$

oder anderen geeigneten Mitteln der Koordinatentransformation, wie etwa einem digitalen CORDIC Algorithmus ermittelt werden.
Der Betragswert B 203 der Koordinatentransformation ist für alle Drehstellungen konstant und beträgt:

$$B = \sqrt{V\sin^2 + V\cos^2} = konst. \qquad [14]$$

Fig.12 zeigt das normierte Summensignal 113 = Vsin, sowie das normierte Differenzsignal 114 = Vcos. Weiterhin wird in einer zweiten Ordinatenachse die aus Vsin und Vcos errechnete absolute Drehstellung 202 in einer Skalierung von +/- 180° dargestellt.
In vielen Anwendungen kann es sinnvoll sein, die errechnete Drehstellung mit einer definierten mechanischen Position des drehbaren Elements 4 in Einklang zu bringen, beispielsweise die Nullstellung eines Drehstellers. Um dies zu erleichtern, kann eine beliebige Drehstellung durch Subtraktion eines Null-Referenzwertes 204 zu Null gesetzt werden.
Weiterhin kann die erzielte Genauigkeit der angezeigten Drehstellung optional durch eine Linearisierungsschaltung 205 erhöht werden. Übliche Formen der Linearisierung sind Tabellen oder mathematische Korrekturfunktionen welche die errechnete Drehstellung an vom Anwender definierte Referenzpunkte anzugleichen versuchen.
In weiterer Folge kann die errechnete und linearisierte Drehstellung W_L durch Konvertierung in eine analoge Signalform 207 oder eine digitale Signalform 208 dem Anwender zur Verfügung gestellt werden

In einer vorteilhaften Ausführungsform kann, wie in Fig. 8 gezeigt, die Signalverarbeitung auf digitalem Wege durchgeführt werden. Die von den Hallsensoren 1,2 generierten Signale 101,102 werden unmittelbar mittels eines Analog-Digital-Umsetzers 201/1 in eine digitale Signalform umgewandelt und die unter Fig. 7, Block 100 beschriebenen Signalverarbeitungsschritte werden in einer digitalen Recheneinheit durchgeführt. Die dafür notwendigen Parameter für Verstärkung, Offset, Nullpunkt und Linearisierung können in einem digitalen Speicher hinterlegt werden.

Soll die vertikale Komponente des Magnetfeldes ausgewertet werden, so werden die Hallsensoren unterhalb der Magnetfeldquelle angeordnet.

Mit dieser Erfindung kann die absolute Winkelstellung eines drehbaren Körpers ermittelt werden, wobei die beiden Hallsensoren auf einem gemeinsamen Substrat integriert sind und das radiale oder das vertikale Magnetfeld einer, am drehbaren Körper montierten Magnetfeldquelle an dessen Umfang messen und auswerten. Die Signale der Hallsensoren können einen in einem weiten Bereich beliebigen Phasenversatz und Signalhub aufweisen. Bei Verwendung einer 2-poligen Magnetfeldquelle ist eine unmittelbare, absolute Winkelstellung über eine volle Umdrehung von 360° messbar. Bei Verwendung einer mehrpoligen Magnetfeldquelle ist eine unmittelbare, absolute Winkelstellung innerhalb eines Polpaares messbar. Mithin eine unmittelbare, absolute Positionsbestimmung über eine volle Umdrehung von 360° möglich.

Weiterhin erlaubt dieser Aufbau einen weiten Toleranzbereich für die Justage des Sensors relativ zur Magnetfeldquelle, da die durch Montage-Ungenauigkeiten entstehenden Signalveränderungen der beiden Hallsensoren in Bezug auf Phasenversatz, Offset und Signalhub durch eine Referenzfahrt ermittelt und korrigiert werden. Dazu wird die Magnetfeldquelle über den zu messenden Winkelbereich bewegt und dabei werden relevante Signalpunkte wie Maximal- und Minimalwerte gemessen. Aus diesen Signalpunkten werden Korrekturparameter berechnet welche es erlauben, aus den beiden mit Amplituden-, Offset- und Phasenversatz behafteten Sensorsignalen zwei exakt 90° phasenverschobene Signale mit gleichem Signalpegel und ohne Offset zu errechnen. Diese beiden Signale werden anschließend in eine digitale Signalform umgesetzt und es wird auf digitalem Wege die absolute Drehstellung des drehbaren Körpers berechnet. Durch die Art der Auswertung der Signale mittels Summen- und Differenzbildung wird insbesondere im Bereich der Pole, in den Regionen der Winkelstellung um 90° bzw. 270° eine ausgeprägte Störfestigkeit gegenüber magnetischen Fremdfeldern erreicht.

Vorteil der Erfindung ist ihre Einsetzbarkeit bei der kontaktlosen Bestimmung der absoluten Drehwinkelposition eines bewegten Körpers vor allem in Sensoren der Automobilindustrie, der industriellen Automation, bei Geräten der Medizintechnik und der Konsumgüterindustrie aufgrund ihrer Robustheit und Langlebigkeit.

Die Erfindung ermöglicht, sowohl die Sensoren als auch die Auswerteschaltung auf einem Substrat zu integrieren und mit Standardprozessverfahren der Halbleiterindustrie kostengünstig, also auf möglichst geringer Fläche herzustellen.

Da in einer vorteilhaften Ausgestaltung der Erfindung mittels zweier Hallsensoren nur das radiale Feld erfasst und ausgewertet wird, mithin das Magnetfeld nur in einer Achse gemessen wird, ist dieser Aufbau weniger anfällig auf externe magnetische Störfelder. Eine weitere Verbesserung der Störunterdrückung wird durch die differentielle Auswertung der beiden Sensorsignale erreicht. Dadurch wird insbesondere im Bereich der Pole, in den Regionen der Winkelstellung um 90° bzw. 270° eine ausgeprägte Störfestigkeit gegenüber magnetischen Fremdfeldern erreicht.Vorteil der Erfindung ist zudem, dass eine Korrektur des Phasenversatzes im Bereich von $0° < \varphi < 180°$ oder $180° < \varphi < 360°$ möglich ist.

Vorteil der Erfindung ist weiterhin, dass zwei Hallsensoren in einem Gehäuse integrierbar sind.

Die Erfindung wurde anhand von Beispielen und Figuren näher erläutert, wobei diese Darstellung die Erfindung nicht einschränken soll. Es versteht sich, dass Fachleute Änderungen und Abwandlungen machen können, ohne den Umfang der folgenden Ansprüche zu verlassen. Insbesondere umfasst die Erfindung Ausführungsformen mit jeglicher Kombination von Merkmalen der verschiedenen Ausführungsformen, die hier beschrieben sind.

**Bezugzeichenliste**

1 erster magnetosensitiver Sensor
2 zweiter magnetosensitiver Sensor
4 drehbares Element
5 Magnetfeldquelle
7 mehrpolig magnetisierter Scheibenmagnet
8 2-polig diametral magnetisierter Ringmagnet
9 mehrpolig magnetisierter Ringmagnet
10 translatorisch gelagertes Element
101 erstes Sensorsignal

102 zweites Sensorsignal
103 erster Offset
104 zweiter Offset
105 erste Verstärkung
106 zweite Verstärkung
107 erstes normiertes Sensorsignal
108 zweites normiertes Sensorsignal
109 Summensignal
110 Differenzsignal
113 normiertes Summensignal
114 normiertes Differenzsignal
202 absolute Drehstellung
203 Betragswert B der Koordinatentransformation
207 analoge Signalform
208 digitale Signalform
100 analoger Signalverarbeitungsblock
200 digitaler Signalverarbeitungsblock

**Patentansprüche**

1. Verfahren zur Bestimmung der absoluten Position eines relativ zu zwei magnetosensitiven Sensoren drehbaren Elements, an welchem eine Magnetfeldquelle befestigt ist, deren magnetische Eigenschaften mittels der magnetosensitiven Sensoren dadurch ermittelt werden, dass ein erstes Sensorsignal (101) mit einem ersten magnetosensitiven Sensor und ein zweites Sensorsignal (102) mit einem zweiten magnetosensitiven Sensor gemessen wird, wobei das erste Sensorsignal (101) und das zweite Sensorsignal (102) eine Komponente des Magnetfeldes repräsentiert und die Sensorsignale (101,102) einen Phasenversatz φ im Bereich von 0°< φ <180° oder 180° < φ <360° aufweisen, wobei vorgesehen ist,

   - dass Amplitudenverhältnisse durch Division eines vorgebbaren Signalhubs durch eine Differenz eines Maximumwertes und eines Minimumwertes der jeweiligen Sensorsignale (101,102) bestimmt werden,
   - dass Offsetwerte (103,104) um den jeweiligen Nullpunkt der Sensorsignale (101,102) aus den Minimum- und Maximumwerten der Sensorsignale (101,102) bestimmt werden,
   - dass mittels Subtraktion der Offsetwerte von den Sensorsignalen (101,102) und durch Normierung mit den Amplitudenverhältnissen normierte Sensorsignale (107,108) berechnet werden, wobei die Bestimmung der Minimum- und Maximumwerte durch eine relative Bewegung des Elements und der daran befestigten Magnetfeldquelle über eine volle Drehung von 360° bei gleichzeitiger Erfassung der Sensorsignale (101,102) beider Sensoren (1,2) erfolgt,
   - dass von den normierten Sensorsignalen (107,108) ein Summensignal (109) und ein Differenzsignal (110) gebildet werden,
   - dass das Summensignal (109) und das Differenzsignal (110) wiederum nach Bestimmung des Amplitudenverhältnisses normiert werden (113,114), wobei die Bestimmung der Minimum- und Maximumwerte durch relative Bewegung des Elements und der daran befestigten Magnetfeldquelle über eine volle Drehung von 360° bei gleichzeitiger Messung des Summensignals (109) sowie des Differenzsignals (110) und Auswertung der Minimum- und Maximumwerte des Summensignals (109) und des Differenzsignals (110) erfolgt und
   - dass mittels des normierten Summensignals (113) und des normierten Differenzsignals (114) eine absolute Position (202) der Magnetfeldquelle berechnet wird.

2. Verfahren nach Anspruch 1, wobei die Komponente des Magnetfeldes die radiale oder die axiale Komponente ist.

3. Verfahren nach einem der Ansprüche 1 bis 2, wobei die absolute Drehstellung (202) der Magnetfeldquelle durch Bildung des Arcustangens des Verhältnisses von dem normierten Summensignal (113) und dem normierten Differenzsignal (114) berechnet wird.

4. Verfahren nach einem der Ansprüche 1 bis 3, wobei die absolute Drehstellung (202) der Magnetfeldquelle mittels eines Algorithmus der Koordinatentransformation, vorzugsweise mit einem CORDIC Algorithmus berechnet wird.

5. Verfahren nach einem der Ansprüche 1 bis 4, wobei die Sensorsignale (1,2) größer als das Rauschen sind.

6. Vorrichtung zur berührungslosen Erfassung der absoluten Position eines drehbaren Elements, welches eine auf dem beweglichen Element (4) befestigte Magnetfeldquelle aufweist, mit einer Signalverarbeitungseinheit (100; 200) die gestaltet ist, die Verfahrensschritte nach Anspruch 1 auszuführen, wobei vorgesehen ist, dass zwei in einer Ebene liegende, in Richtung der Bewegung räumlich versetzte magnetosensitive Sensoren (1,2) von der Magnetfeldquelle (5) beabstandet angeordnet sind, wobei der Abstand zwischen den Sensoren (1,2) so gewählt wird, dass der sich ergebende Phasenversatz der Sensorsignale nicht 180° und nicht 360° beträgt.

7. Vorrichtung nach Anspruch 6, wobei die magnetosensitiven Sensoren als Hallsensoren ausgebildet sind.

8. Vorrichtung nach Anspruch 6 oder 7, wobei die magnetosensitiven Sensoren so konfiguriert sind, dass sie die radiale Komponente oder die axiale Komponente des Magnetfeldes erfassen.

9. Vorrichtung nach einem der Ansprüche 6 bis 8, wobei die Magnetfeldquelle einen mehrpolig magnetisierten Scheibenmagnet (7) oder Ringmagnet (9) mit einer Anzahl pp von Polpaaren aufweist, welche einen absolut messbaren Drehstellungsbereich von 360 Grad geteilt durch die Anzahl der Polpaare ermöglicht.

10. Vorrichtung nach einem der Ansprüche 6 bis 8, wobei die Magnetfeldquelle einen 2-polig diametral magnetisierten Scheibenmagnet (5) aufweist.

11. Vorrichtung nach einem der Ansprüche 6 bis 10, wobei die Sensoren (1,2) gemeinsam auf einem Sensorchip integriert sind.

12. Vorrichtung nach Anspruch 11, wobei der Sensorchip einen Analog/Digitalwandler enthält, der eingangsseitig mit den Ausgängen der Sensoren (1,2) sowie ausgangsseitig mit einer digitalen Recheneinheit verbunden ist.

13. Vorrichtung nach Anspruch 12, wobei die digitale Recheneinheit einen Speicher zur Aufnahme von Offset (103,104) und Verstärkung(105,106,111,112) aufweist.

## Claims

1. Method for determining the absolute position of an element rotatable relative to magnetosensitive sensors, to which element a magnetic field source is fastened, the magnetic properties of which are established by the magnetosensitive sensors by virtue of a first sensor signal (101) being measured by a first magnetosensitive sensor and a second sensor signal (102) being measured by a second magnetosensitive sensor, wherein the first sensor signal (101) and the second sensor signal (102) represent a component of the magnetic field and the sensor signals (101, 102) have a phase offset $\varphi$ in the range of $0° < \varphi < 180°$ or $180° < \varphi < 360°$, wherein provision is made

   - for amplitude ratios to be determined by dividing a predetermined signal swing by a difference between a maximum value and a minimum value of the respective sensor signals (101, 102),
   - for offset values (103, 104) about the respective zero of the sensor signals (101, 102) to be determined from the minimum and maximum values of the sensor signals (101, 102),
   - for normalized sensor signals (107, 108) to be calculated by subtracting the offset values from the sensor signals (101, 102) and by normalization with the amplitude ratios, wherein the minimum and maximum values are determined by a relative movement of the element and the magnetic field source fastened thereto over a full rotation of 360° while simultaneously registering the sensor signals (101, 102) from both sensors (1, 2),
   - for a sum signal (109) and a difference signal (110) to be formed from the normalized sensor signals (107, 108),
   - for the sum signal (109) and the different signal (110) to be normalized (113, 114) in turn after determining the amplitude ratio, wherein the minimum and maximum values are determined by relative movement of the element and the magnetic field source fastened thereto over a full rotation of 360° while simultaneously measuring the sum signal (109) and the difference signal (110) and evaluating the minimum and maximum values of the sum signal (109) and of the difference signal (110), and
   - for an absolute position (202) of the magnetic field source to be calculated by means of the normalized sum signal (113) and the normalized difference signal (114).

2. Method according to Claim 1, wherein the component of the magnetic field is the radial or axial component.

3. Method according to either of Claims 1 and 2, wherein the absolute rotational position (202) of the magnetic field source is calculated by forming the arctangent of the ratio of the normalized sum signal (113) and the normalized difference signal (114).

4.  Method according to one of Claims 1 to 3, wherein the absolute rotational position (202) of the magnetic field source is calculated by means of a coordinate transformation algorithm, preferably by means of a CORDIC algorithm.

5.  Method according to one of Claims 1 to 4, wherein the sensor signals (1, 2) are greater than the noise.

6.  Device for contactless detection of the absolute position of a rotatable element, which has the magnetic field source fastened to the movable element (4), with a signal processing unit (100; 200) configured to carry out the method steps according to Claim 1, wherein provision is made for two magnetosensitive sensors (1 2), which lie in a plane and which are spatially offset in the direction of the movement, to be arranged at a distance from the magnetic field source (5), wherein the distance between the sensors (1, 2) is selected in such a way that the resulting phase offset of the sensor signals is not 180° and not 360°.

7.  Device according to Claim 6, wherein the magnetosensitive sensors are embodied as Hall sensors.

8.  Device according to Claim 6 or 7, wherein the magnetosensitive sensors are configured in such a way that they detect the radial component or the axial component of the magnetic field.

9.  Device according to one of Claims 6 to 8, wherein the magnetic field source has a multi-pole magnetizable disc magnet (7) or ring magnet (9) with a number pp of pole pairs, which enable an absolute measurable rotational position range of 360 degrees divided by the number of pole pairs.

10.  Device according to one of Claims 6 to 8, wherein the magnetic field source has a 2-pole diametrically magnetizable disc magnet (5).

11.  Device according to one of Claims 6 to 10, wherein the sensors (1, 2) are integrated together on a sensor chip.

12.  Device according to Claim 11, wherein the sensor chip contains an analogue-to-digital converter, which is connected to the outputs of the sensors (1, 2) on the input side and to a digital computer unit on the output side.

13.  Device according to Claim 12, wherein the digital computer unit has a memory for recording offset (103, 104) and gain (105, 106, 111, 112).

**Revendications**

1.  Procédé de détermination de la position absolue d'un élément rotatif par rapport à deux capteurs magnétorésistifs, auquel est fixée une source de champ magnétique dont les propriétés magnétiques sont déterminées au moyen des capteurs magnétorésistifs en ce qu'un premier signal de capteur (101) est mesuré avec un premier capteur magnétorésistif et un deuxième signal de capteur (102) avec un deuxième capteur magnétorésistif, le premier signal de capteur (101) et le deuxième signal de capteur (102) représentant une composante du champ magnétique et les signaux de capteur (101, 102) présentant un déphasage φ dans la plage de 0° < φ < 180° ou 180° < φ < 360°, procédé selon lequel il est prévu

    - que les rapports d'amplitude sont déterminés par la division d'une excursion de signal pouvant être prédéfinie par une différence entre une valeur maximale et une valeur minimale du signal de capteur (101, 102) correspondant,
    - que les valeurs de décalage (103, 104) autour du point zéro correspondant des signaux de capteur (101, 102) sont déterminées à partir des valeurs minimale et maximale des signaux de capteur (101, 102),
    - que des signaux de capteur normalisés (107, 108) sont calculés au moyen de la soustraction des valeurs de décalage des signaux de capteur (101, 102) et par normalisation avec les rapports d'amplitude, la détermination des valeurs minimale et maximale étant effectuée par un mouvement relatif de l'élément et de la source de champ magnétique qui y est fixée sur un tour complet de 360° avec acquisition simultanée des signaux de capteur (101, 102) des deux capteurs (1, 2),
    - qu'un signal total (109) et un signal différentiel (110) sont formés à partir des signaux de capteur normalisés (107, 108),

- que le signal total (109) et le signal différentiel (110) sont à leur tour normalisés (113, 114) après la détermination du rapport d'amplitude, la détermination des valeurs minimale et maximale étant effectuée par un mouvement relatif de l'élément et de la source de champ magnétique qui y est fixée sur un tour complet de 360° avec mesure simultanée du signal total (109) ainsi que du signal différentiel (110) et interprétation des valeurs minimale et maximale du signal total (109) et du signal différentiel (110), et
- qu'une position absolue (202) de la source de champ magnétique est calculée au moyen du signal total normalisé (113) et du signal différentiel normalisé (114).

2. Procédé selon revendication 1, selon lequel la composante du champ magnétique est la composante radiale ou la composante axiale.

3. Procédé selon l'une des revendications 1 à 2, selon lequel la position de rotation absolue (202) de la source de champ magnétique est calculée en formant l'arctangente du rapport du signal total normalisé (113) et du signal différentiel normalisé (114).

4. Procédé selon l'une des revendications 1 à 3, selon lequel la position de rotation absolue (202) de la source de champ magnétique est calculée au moyen d'un algorithme de la transformation de coordonnées, de préférence avec un algorithme CORDIC.

5. Procédé selon l'une des revendications 1 à 4, selon lequel les signaux de capteur (1, 2) sont plus grands que le bruit.

6. Dispositif de détection sans contact de la position absolue d'un élément rotatif, lequel possède une source de champ magnétique fixée sur l'élément mobile (4), comprenant une unité de traitement de signal (100 ; 200) qui est configurée pour exécuter les étapes du procédé selon la revendication 1, dispositif avec lequel il est prévu que deux capteurs magnétorésistifs (1, 2) décalés dans l'espace dans la direction du mouvement sont disposés à distance de la source de champ magnétique (5), l'écart entre les capteurs (1, 2) étant choisi de telle sorte que le déphasage des signaux de capteur qui en résulte n'est égal ni à 180° ni à 360°.

7. Dispositif selon la revendication 6, avec lequel les capteurs magnétorésistifs sont réalisés sous la forme de capteurs à effet Hall.

8. Dispositif selon la revendication 6 ou 7, avec lequel les capteurs magnétorésistifs sont configurés de telle sorte qu'ils détectent la composante radiale ou la composante axiale du champ magnétique.

9. Dispositif selon l'une des revendications 6 à 8, avec lequel la source de champ magnétique possède un aimant en disque (7) ou un aimant annulaire (9) à magnétisation multipolaire comprenant un nombre pp de paires de pôles, lequel rend possible une plage de positions de rotation mesurable absolue de 360 degrés divisée par le nombre de paires de pôles.

10. Dispositif selon l'une des revendications 6 à 8, avec lequel la source de champ magnétique possède un aimant en disque (5) magnétisé diamétralement à 2 pôles.

11. Dispositif selon l'une des revendications 6 à 10, avec lequel les capteurs (1, 2) sont intégrés en commun sur une puce de capteur.

12. Dispositif selon la revendication 11, avec lequel la puce de capteur contient un convertisseur analogique/numérique dont l'entrée est reliée aux sorties des capteurs (1, 2) et dont la sortie est reliée à une unité de calcul numérique.

13. Dispositif selon la revendication 12, avec lequel l'unité de calcul numérique possède une mémoire destinée à enregistrer le décalage (103, 104) et l'amplification (105, 106, 111, 112).

Fig. 1

Fig. 2

Fig. 3          Fig. 4          Fig. 5          Fig. 6

Fig. 7

Fig. 8

**Eingangssignale**

Fig. 9

**Eingangssignale normiert**

Fig. 10

**Summe und Differenz**

Fig. 11

**Summe und Differenz normiert**

113=Sin

114=Cos

202

Signalpegel

Winkel W []

Drehwinkel [°]

Fig. 12

**Amplitudenverhältnis: Summe / Differenz**

112/111
Gain4 / Gain3

Sum/Diff

Phasenverhältnis H2 - H1 [°]

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69816755 T2
- WO 2009088767 A2
- WO 2009088767 A
- WO 200004339 A1
- WO 2008077861 A
- US 20080290859 A
- US 20100194385 A
- US 2009206827 A1